# EUROPÄISCHE PATENTANMELDUNG

(11) **EP 0 713 635 A2**
(43) Veröffentlichungstag der Anmeldung: **29.05.1996**
(21) Anmeldenummer: 96101717.5
(22) Anmeldetag: 13.03.1993
(51) Int. Cl.: A01B 33/08

(54) **Bodenbearbeitungsmaschine, insbesondere Kreiselegge**

(30) Priorität: 29.04.1992 DE 9205772 U; 10.06.1992 DE 9207783 U; 13.11.1992 DE 9215461 U
(62) Teilanmeldung aus: 93104111.5
(71) Anmelder: Rabewerk GmbH + Co., 49152 Bad Essen (DE)
(72) Erfinder: Warnking, Richard, Dipl.-Ing., D-49152 Bad Essen (DE)
(74) Vertreter: Missling, Arne, Dipl.-Ing.

(57) **Zusammenfassung**

Bei Bodenbearbeitungsmaschinen, insbesondere Kreiseleggen mit mehreren Werkzeugkreiseln (1), welche jeweils an einer Welle (2) befestigt sind, die ihrerseits form- oder kraftschlüssig mit einem Antriebszahnrad (3) verbunden ist, wobei die Antriebszahnräder (3) benachbarter Werkzeugkreisel ineinander greifen, mit einem auf der Bodenbearbeitungsmaschine befestigten und von einer Zapfwelle eines Schleppers antreibbaren Eingangsgetriebe (27), dessen Antriebswelle (10) mit einem der Antriebszahnräder (3) betriebsverbunden ist, wird zur Erleichterung des Zusammenbaus und der Steigerung der Betriebssicherheit die Antriebswelle (10) des Eingangsgetriebes (27) mit mindestens einem Mitnehmer (11) versehen, der in eine im Antriebszahnrad (3) ausgebildete Ausnehmung eingesteckt ist.

## Beschreibung

Die Erfindung bezieht sich auf eine Bodenbearbeitungsmaschine, insbesondere Kreiselegge mit mehreren Werkzeugkreiseln, welche jeweils an einer Welle befestigt sind, die ihrerseits form- oder kraftschlüssig mit einem Antriebszahnrad verbunden ist, wobei die Antriebszahnräder benachbarter Werkzeugkreisel ineinander greifen, mit einem auf der Bodenbearbeitungsmaschine befestigten und von einer Zapfwelle eines Schleppers antreibbaren Eingangsgetriebe, dessen Antriebswelle mit einem der Antriebszahnräder betriebsverbunden ist.

Kreiseleggen sind in vielfältigsten Ausführungsvarianten bekannt. Bei Kreiseleggen ist es stets erforderlich, die einzelnen Wellen, an deren unteren Enden die Werkzeuge befestigt sind, in ausreichend stabiler Weise an einem Kastenbalken zu lagern. In dem Kastenbalken befinden sich die einzelnen Zahnräder, welche zum Antrieb der Wellen erforderlich sind. Der Kastenbalken muß eine ausreichende Stabilität aufweisen, um Verformungen während des Betriebes zu vermeiden, welche wiederum zu Beschädigungen der Zahnräder und/oder der Lagerungen der Wellen führen würden. Weiterhin ist es erforderlich, im Innenraum des Kastenbalkens ein Schmiermittel, beispielsweise Öl, zur Schmierung der Lager und der Zahnräder einzubringen, so daß auch entsprechende Abdichtmaßnahmen erforderlich sind. Weiterhin ergibt sich die Notwendigkeit, bei Beschädigung einzelner Werkzeugkreisel diese einfach und schnell reparieren zu können.

Die üblichen, aus dem Stand der Technik bekannten Ausgestaltungsformen von Kastenprofilen sehen einen trogartigen Unterteil vor, auf welchen ein Deckel aufgeschraubt ist. Nachteilig hierbei ist, daß, abgesehen von der verminderten Stabilität, eine Vielzahl von Schrauben zur Befestigung des Deckels erforderlich sind und daß erhebliche Aufwendungen zur Abdichtung getroffen werden müssen.

Es ist eine Kreiselegge bekannt, bei welcher der Kastenbalken in Form eines einen im wesentlichen rechteckigen Querschnitt aufweisenden geschlossenen Gehäuses (Hohlprofil) ausgebildet ist. Dieses ist durch seitliche Deckel verschlossen und weist untere und obere Öffnungen auf, durch welche die Lagerungen der Werkzeugkreisel eingesteckt und die Zahnräder befestigt werden können. Bei der Montage werden die Zahnräder seitlich in das Hohlprofil eingeschoben, anschließend wird von unten die Welle durchgesteckt und mittels einer Nut-Feder-Verbindung drehfest mit den Zahnrädern gekoppelt. Nachfolgend werden die Zahnräder von oben, durch die oberen Öffnungen des Kastenprofiles mit den Wellen verschraubt. Es erweist sich als besonders nachteilig, daß eine Vielzahl von Öffnungen in dem Kastenprofil vorgesehen werden müssen, welche zu einer erheblichen Schwächung der Stabilität und Festigkeit führen. Weiterhin ist der Montageaufwand auch für die Befestigung des Eingangsgetriebes und dessen Wirkverbindung mit den Zahnrädern sehr hoch. Ein weiterer Nachteil besteht in der Verwendung von Keilwellenprofilen, diese führen bei Kreiseleggen durch den Betrieb zu Lockerungen, wodurch Beschädigungen insbesondere der Zahnräder, Lager und der Wellen sowie der gesamten Werkzeugkreisel auftreten.

Der Erfindung liegt die Aufgabe zugrunde, eine Bodenbearbeitungsmaschine der eingangs genannten Art zu schaffen, welche bei einfachem Aufbau und einfacher, kostengünstiger Herstellbarkeit ein hohes Maß an Stabilität und Festigkeit aufweist, bei welcher Beschädigungen der Bauelemente durch den Betrieb weitgehend vermieden werden und welche sich durch ein hohes Maß an Montage- und Servicefreundlichkeit auszeichnet.

Erfindungsgemäß wird die Aufgabe dadurch gelöst, daß die Antriebswelle des Eingangsgetriebes mit mindestens einem Mitnehmer versehen ist, der in eine im Antriebszahnrad ausgebildete Ausnehmung eingesteckt ist.

Die Montage eines erfindungsgemäßen Eingangsgetriebes auf einer Bodenbearbeitungsmaschine ist mit sehr einfachen Mitteln in kürzester Zeit zu erreichen und zwar aufgrund der Tatsache, daß an der Antriebswelle des Eingangsgetriebes lediglich Mitnehmerzapfen angeordnet werden, wobei ein Zapfen bereits ausreichend ist, vorteilhaft jedoch zwei Mitnehmerzapfen verwendet werden. Für die Verbindung der Antriebszahnräder mit dem Getriebe sind lediglich im Antriebszahnrad Ausnehmungen entsprechend der Form der Mitnehmer anzubringen. Beim Aufsetzen des Eingangsgetriebes werden die Mitnehmer in diese Ausnehmungen des Antriebszahnrades eingesteckt. Durch diese einfache Verbindung werden gleichzeitig Fluchtungsfehler, welche im Betrieb der Maschine zu Wellenbrüchen führen können, zwischen Ausgangswelle des Eingangsgetriebes und Antriebszahnrad sicher ausgeschlossen.

Es braucht dann lediglich noch das Eingangsgetriebe am Bodenbearbeitungsgerät befestigt zu werden. Dies kann entweder in herkömmlicher Weise mittels Schrauben erfolgen, die mit dem Deckel oder den Seitenrändern des die Zahnräder aufnehmenden Kastenbalkens eingeschraubt werden, oder aber vorteilhaft gemäß einem weiteren Vorschlag der Erfindung mittels Schraubbändern, die U-förmig ausgebildet sind und von unten unter den Kastenbalken geschoben werden und mit dem Flansch des Eingangsgetriebes verschraubt werden. Diese Art der Befestigung ist zum einen sehr schnell herzustellen und zum anderen bietet diese eine dauerhaft feste Verbindung von Eingangsgetriebe und Kastenbalken der Kreiselegge. Darüber hinaus hat diese Art der Befestigung auch den Vorteil, daß Schweißverbindungen nicht benötigt werden, die immer zu einem Verziehen des Kastenbalkens führen.

Weitere vorteilhafte Ausgestaltungen gehen aus den Unteransprüchen in Verbindung mit Beschreibung und Zeichnungen hervor.

Im folgenden wird die Erfindung anhand eines Ausführungsbeispieles in Verbindung mit der Zeichnung näher beschrieben. In dieser zeigt:
- Fig. 1: die stirnseitige Ansicht einer erfindungsgemäßen Bodenbearbeitungsmaschine,
- Fig. 2: eine Schnittansicht B-B aus Fig. 1 mit einem Eingangsgetriebe,
- Fig. 3: eine endseitige Ansicht C aus Fig. 1 auf den Deckelbereich des Hohlprofiles,
- Fig. 4: eine Seitenansicht der in Fig. 3 gezeigten Anordnung.

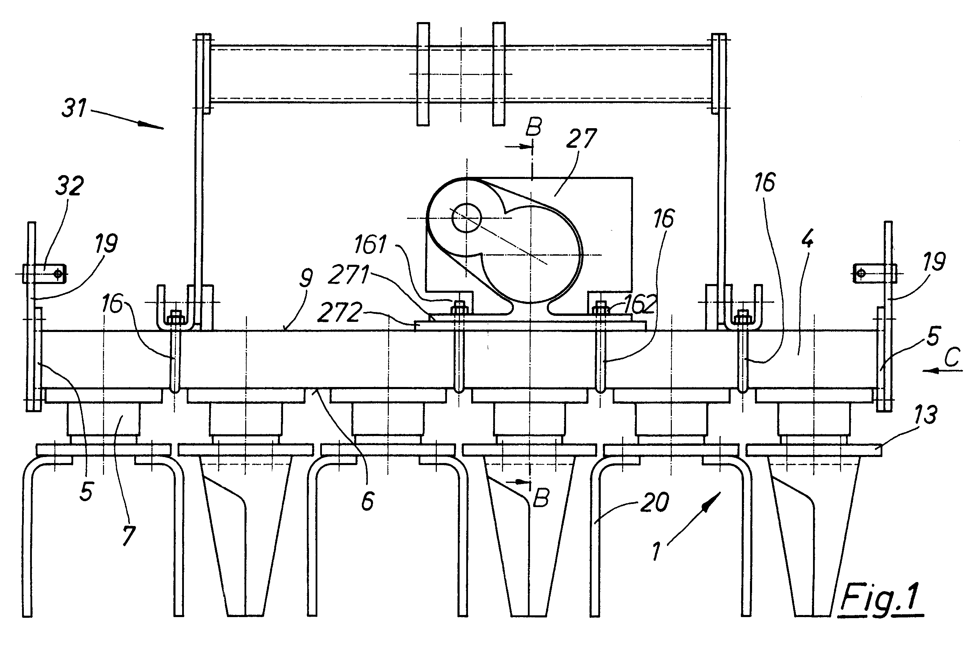

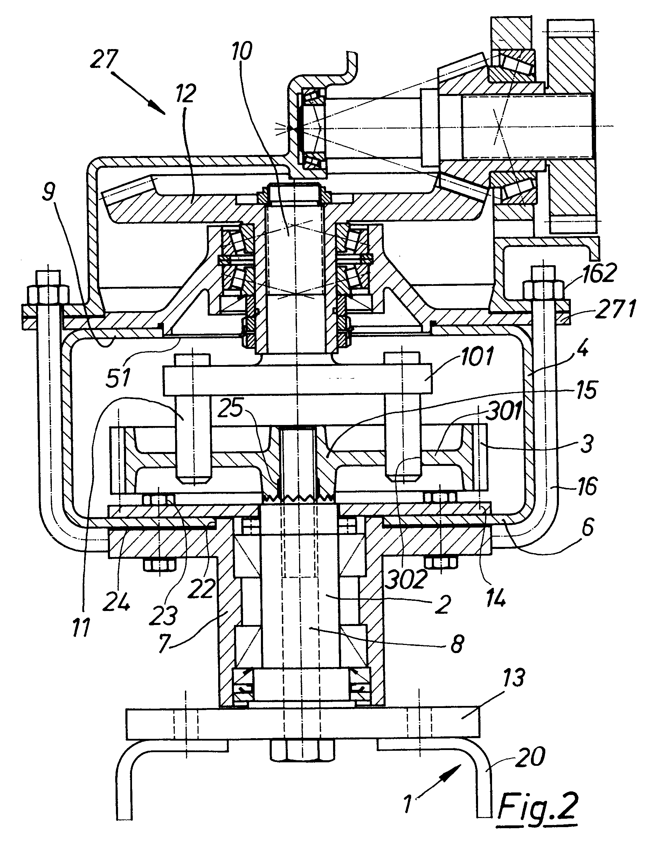

Die Fig. 2 zeigt eine Schnittansicht B-B aus Fig. 1 durch einen Kastenbalken. Die Werkzeugkreisel 1 umfassen in üblicher Weise einen Werkzeugträger 13, an welchem Zinken 20 angeschraubt sind. Der Werkzeugträger 13 kann einstückig mit einer Welle 2 verbunden sein, beispielsweise durch Verschweißen, es ist jedoch auch möglich, diesen lösbar, etwa mittels einer planen Kerbverzahnung, formschlüssig mit der Welle 2 zu verbinden. Die Welle 2 weist eine zentrische Ausnehmung auf, durch welche eine Schraube 8 (Spanneinrichtung) durchführbar ist. Die Schraube 8 ist in einen Gewindebereich einer Nabe 15 eines Zahnrades 3 (Stirnrad) eingeschraubt. Die Nabe 15 des Zahnrades 3 ist an ihrer Unterseite, ebenso wie die stirnseitige obere Fläche der Welle 2 mit einer planen Kerbverzahnung versehen. Diese Kerbverzahnung ist beispielsweise als sogenannten Hirth-Verzahnung ausgestaltet. Es ergibt sich somit eine drehfeste Koppelung zwischen dem Zahnrad 3 und der Welle 2, welche durch die Spanneinrichtung 8 aufrechterhalten wird.

Wie in der Fig. 2 gezeigt, ist die Welle 2 in einem Lagergehäuse 7 gelagert, welches zusätzlich zu den Lagern auch geeignete Dichtungen aufnimmt. Die Lager und die Dichtungen brauchen im einzelnen nicht beschrieben werden, da diese aus dem Stand der Technik bekannt sind.

Das Lagergehäuse 7 weist an seinem oberen Endbereich einen Zentrierbereich 22 auf, welcher in eine Öffnung einer unteren Wandung 6 eines Gehäuses 4 einbringbar ist. Das Gehäuse 4 ist als geschlossenes Hohlprofil mit einem im wesentlichen rechteckigen Querschnitt ausgebildet. Die Befestigung der Lagergehäuse 7 erfolgt mittels Schrauben, welche, wie in Fig. 2 gezeigt, unter zusätzlicher Zwischenschaltung einer Platte 14 verschraubt sind. Die Fig. 2 zeigt Muttern 23, welche mit der Platte 14 verschweißt sind. Diese muß sich nicht einstückig über die gesamte Breite der Kreiselegge erstrecken.

Zur Abdichtung zwischen dem Lagergehäuse 7 und dem Hohlprofil 4 ist eine Dichtung 24 vorgesehen. Weiterhin können unter den Köpfen der Schrauben zur Befestigung des Lagergehäuses 7 zusätzliche Dichtungen vorgesehen sein.

Die Fig. 1 zeigt eine Vorderansicht der Bodenbearbeitungsmaschine, aus welcher sich insbesondere ergibt, daß stirnseitige Endplatten 5 vorgesehen sind, um die stirnseitigen Öffnungen des Hohlprofiles 4 zu verschließen. Es ist möglich, entweder nur auf einer Seite oder auf beiden Seiten des Hohlprofiles 4 die Endplatten 5 demontierbar vorzusehen. Die Zahnräder sind somit entweder von einer Seite oder beidseitig einschiebbar.

Wie die Fig. 2 weiterhin zeigt, ist die Nabe 15 des Zahnrades 3 nach unten verlängert, so daß diese in die jeweilige Ausnehmung der Platte 14 einlegbar ist, um zu verhindern, daß die Zahnräder 3 während des Montagevorganges verrutschen. Nach dem Einschieben der Zahnräder ist es möglich, die Schraube 8 einzuschrauben, dieser Vorgang kann durch eine Bohrung 25 größeren Durchmessers am unteren Bereich der Nabe 15 erleichtert werden.

Wie die Fig. 1 zeigt, ist im mittleren Bereich des Hohlprofiles 4 ein Eingangsgetriebe 27 angeordnet, welches in Fig. 2 im einzelnen dargestellt ist. Das Eingangsgetriebe umfaßt unter anderem eine Antriebswelle 10, auf welcher ein Antriebs-Tellerrad 12 befestigt ist. Im übrigen entspricht das Eingangsgetriebe 27 dem bekannten Stand der Technik, so daß auf eine detaillierte Beschreibung verzichtet werden kann. Am unteren Ende der Antriebswelle 10 sind Mitnehmerelemente 11 mit Abstand zur Welle gelagert, welche in Ausnehmungen eines der Zahnräder 3 eingreifen, um dieses anzutreiben. Oberhalb zumindest eines Zahnrades 3 ist eine Öffnung 51 im Gehäuse 4 angeordnet, deren Größe dem Querträger 101 angepaßt ist, so daß die Montage des Eingangsgetriebes 27 allein durch Aufsetzen und Einstecken der Mitnehmer 11 in die in der Scheibe 301 ausgebildeten Ausnehmungen 302 bewirkt wird. Zur Festlegung des Eingangsgetriebes 27 dienen Schraubbänder 16, die um das Gehäuse 4 gelegt sind, in Ausnehmungen 271 des Eingangsgetriebes 27 greifen und mittels Muttern 162 verspannt sind. Die Montage sowie Demontage des Eingangsgetriebes 27 ist somit in kürzester Zeit möglich und mit wenig Aufwand verbunden.

Das Eingangsgetriebe 27 ist in eine Öffnung einer oberen Wandung 9 des Hohlprofiles 4 eingesetzt. Die Befestigung kann über Schraubbänder 16 erfolgen, wie in Fig. 2 gezeigt. Es ist jedoch auch möglich, das Eingangsgetriebe 27 direkt mit dem Hohlprofil 4 zu verschrauben. Hierzu sind Verstärkungsteile vorteilhaft, welche vor der Montage des Eingangsgetriebes 27 durch die Öffnung 51 in der oberen Wandung 9 eingeführt und beispielsweise über Muttern mit dem Hohlprofil 4 verschraubt werden. Die Verstärkungsteile weisen Gewindebohrungen auf, welche der Befestigung des Eingangsgetriebes 27 dienen. Es ist somit möglich, dieses zu demontieren, ohne die Verstärkungsteile demontieren zu müssen.

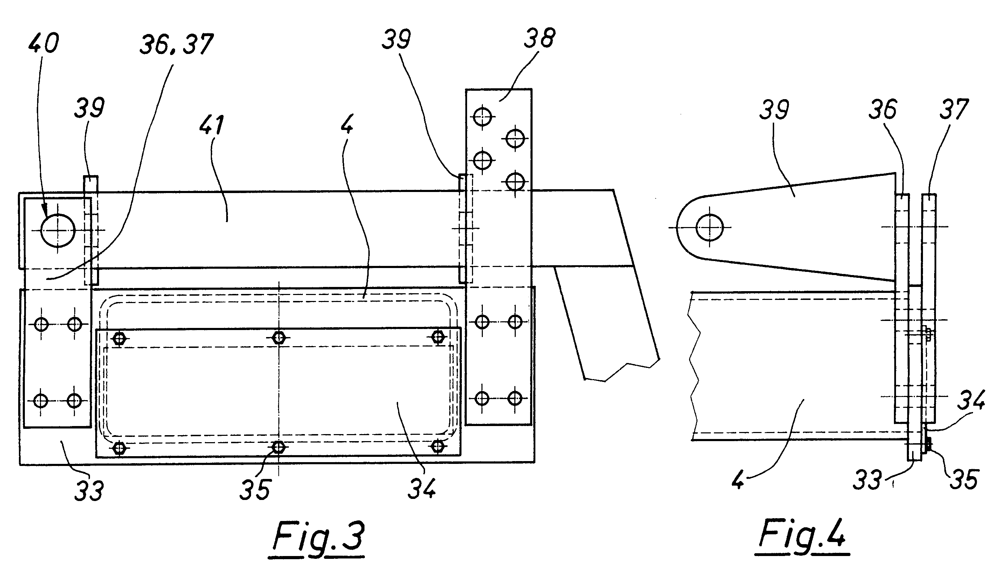

Die Fig. 1 zeigt weiterhin die Möglichkeit, an den seitlichen Endplatten 5 zusätzliche Teile 19 anzubringen, beispielsweise Zapfen 32 zur Lagerung einer nachfolgenden Walze. Alternativ hierzu kann auch, wie in den Fig. 3 und 4 gezeigt, an das Ende des Hohlprofiles 4 eine Platte 33 geschweißt werden, welche, wie durch die gestrichelten Linien dargestellt, eine Öffnung aufweist, welche wiederum über eine Platte 34 verschließbar ist. Die Fig. 4 zeigt, daß die Platte 34 relativ dünn ist und mittels mehrerer Schrauben 35 befestigt ist. Die Platte 33 ist nach vorne und hinten etwas verlängert, so daß vorne aufrechte Stützen 36, 37 angeschraubt werden können. In ähnlicher Weise sind hintere aufrechte Stützen 38 befestigt. Somit können Konsolen 39 an den Stützen 36 und 38 befestigt werden. An den Konsolen 39 können Seitenschilde befestigt werden, welche die Arbeitsbreite der Werkzeuge begrenzen. Weiterhin kann eine Gelenkstelle 40 für Tragarme 41 einer nachlaufenden Walze vorgesehen sein.

Als weitere Alternative zu der in Fig. 1 gezeigten Ausgestaltungsform kann der Deckel auch an einem Flansch befestigt sein, welcher ringförmig das Hohlprofil 4 umgibt und mit diesem verschweißt ist.

## Patentansprüche

1. Bodenbearbeitungsmaschine, insbesondere Kreiselegge mit mehreren Werkzeugkreiseln (1), welche jeweils an einer Welle (2) befestigt sind, die ihrerseits form- oder kraftschlüssig mit einem Antriebszahnrad (3) verbunden ist, wobei die Antriebszahnräder (3) benachbarter Werkzeugkreisel ineinander greifen, mit einem auf der Bodenbearbeitungsmaschine befestigten und von einer Zapfwelle eines Schleppers antreibbaren Eingangsgetriebe (27), dessen Antriebswelle (10) mit einem der Antriebszahnräder (3) betriebsverbunden ist, dadurch gekennzeichnet, daß die Antriebswelle (10) des Eingangsgetriebes (27) mit mindestens einem Mitnehmer (11) versehen ist, der in eine im Antriebszahnrad (3) ausgebildete Ausnehmung eingesteckt ist.

2. Bodenbearbeitungsmaschine nach Anspruch 1, dadurch gekennzeichnet, daß zwei oder mehrere Mitnehmer (11) vorgesehen sind, die an einem mit der Antriebswelle (10) fest verbundenen Querträger (101) angeordnet sind.

3. Bodenbearbeitungsmaschine nach einem der Ansprüche 1 oder 2, dadurch gekennzeichnet, daß die Antriebszahnräder (3) in einem rohrförmigen Gehäuse (4) angeordnet sind und daß in der Oberseite des Gehäuses (4) Ausnehmungen (51) entsprechend den Mitnehmern (11) und ihren Befestigungsmitteln (101) an der Abtriebswelle (10) ausgebildet sind.

4. Bodenbearbeitungsmaschine nach einem der Ansprüche 1 bis 3, dadurch gekennzeichnet, daß das Gehäuse (4) mit seitlichen Endplatten (5) verschließbar ist.

5. Bodenbearbeitungsmaschine nach Anspruch 4, dadurch gekennzeichnet, daß die Endplatten (5) Anschlußteile (19) zum Anbringen, beispielsweise von einer Walze, tragen.

6. Bodenbearbeitungsmaschine nach einem der Ansprüche 1 bis 5, dadurch gekennzeichnet, daß das Eingangsgetriebe (27) auf dem Gehäuse (4) der Bodenbearbeitungsmaschine aufgeschraubt ist.

7. Bodenbearbeitungsmaschine nach einem der Ansprüche 1 bis 5, dadurch gekennzeichnet, daß das Eingangsgetriebe (27) mittels das Gehäuse (4) umgreifenden Schraubbändern (16) befestigt ist.

8. Bodenbearbeitungsmaschine nach Anspruch 7, dadurch gekennzeichnet, daß die Schraubbänder (16) U-förmig entsprechend dem Gehäuse (4) ausgebildet sind und an ihren freien Enden (161) mit Gewinde versehen sind, daß die freien Enden (161) durch Ausnehmungen (271) in einem Flansch (272) des Eingangsgetriebes (27) greifen und mittels Muttern (162) gesichert sind.

9. Bodenbearbeitungsmaschine nach einem der Ansprüche 1 bis 8, dadurch gekennzeichnet, daß der Anbaubock (31) mittels Schraubbändern (16) am Gehäuse (4) befestigt ist.

10. Bodenbearbeitungsmaschine nach einem der Ansprüche 1 bis 9, dadurch gekennzeichnet, daß das Gehäuse (4) als Hohlprofil ausgebildet ist.
